Europäisches Patentamt

European Patent Office

Office européen des brevets

(19)

(11) Numéro de publication: **0 001 535**
**B1**

(12) **FASCICULE DE BREVET EUROPEEN**

(45) Date de publication du fascicule de brevet: **15.07.81**

(51) Int. Cl.³: **H 04 N 5/14, A 61 B 6/02**

(21) Numéro de dépôt: **78400132.3**

(22) Date de dépôt: **11.10.78**

(54) **Procédé et dispositif de traitement d'image pour système de visualisation.**

(30) Priorité: **11.10.77 FR 7730532**

(43) Date de publication de la demande:
**18.04.79 Bulletin 79/8**

(45) Mention de la délivrance du brevet:
**15.07.81 Bulletin 81/28**

(84) Etats Contractants Désignés:
**DE GB NL SE**

(56) Documents cités:
**FR - A - 2 134 049**
**FR - A - 2 136 478**
**FR - A - 2 157 701**
**GB - A - 1 334 048**

(73) Titulaire: **THOMSON-CSF**
**173, Boulevard Haussmann**
**F-75360 Paris Cedex 08 (FR)**

(72) Inventeur: **Blamoutier, Michel**
**"THOMSON-CSF" - SCPI 173, bld Haussmann**
**F-75360 Paris Cedex 08 (FR)**
Inventeur: **Fraleux, Jean**
**"THOMSON-CSF" - SCPI 173, bld Haussmann**
**F-75360 Paris Cedex 08 (FR)**

(74) Mandataire: **Eisenbeth, Jacques Pierre et al,**
**"THOMSON-CSF" - SCPI 173, bld Haussmann**
**F-75360 Paris Cedex 08 (FR)**

Courier Press, Leamington Spa, England.

Procédé et dispositif de traitement d'image pour système de visualisation

La présente invention est relative à un procédé et à un dispositif de traitement d'image pour système de visualisation, et au système de visualisation comprenant un tel dispositif.

Dans la plupart des systèmes de visualisation, les images sont définies sur un écran de visualisation pour un ensemble de points représentés sur l'écran à l'aide d'un signal de luminance de niveau déterminé. Un point est repéré, par exemple dans un balayage d'écran du type télévision, par une adresse $P(i, j)$ où i représente l'ordre d'une ligne de balayage et j le rang du point considéré dans la ligne d'ordre i. A chaque point de coordonnée $P(i, j)$ est associé un signal de luminance de niveau $S(i, j)$, le niveau S du signal de luminance à l'adresse i, j définissant, sur un point de dimensions déterminées connu sous le nom de "pixel" dans la technique considérée, une grandeur représentative de la luminance du point.

Les images obtenues dans ce type de systèmes de viusualisation sont sujettes à certains défauts dus à l'existence de parasites au niveau des signaux de luminance. Des techniques connues permettent d'éliminer certains défauts d'image si ceux-ci sont identifiés sans ambiguité, c'est-à-dire, en pratique, si leur niveau, toujours le même, est connu. C'est le cas, par exemple, du bruit monoionique ou bruit de particule ionisante dans un circuit tube intensificateur d'images et du parasite engendrant un point noir ou un point blanc dans un tube vidicon. Ces techniques utilisent la connaissance préalable de la forme de la courbe de l'histogramme de luminance de l'image. Cette courbe porte en ordonnée le nombre de points d'un niveau de luminance donné en fonction de la luminance elle-même. La technique consiste alors à remplacer le signal de luminance de tout point dont le niveau est égal ou supérieur au niveau du signal parasite par un signal de niveau égal au niveau le plus probable de l'image. Ce procédé est d'autant plus efficace que l'histogramme est plus resserré c'est-à-dire que l'écart type du nombre de points par rapport au niveau de luminance le plus probable est faible. Ce procédé présente des inconvénients, en particulier si les parasites à éliminer se trouvent dans une gamme de niveaux très improbables. Ces points sont par conséquent porteurs d'une quantité d'information élevée, au sens statistique du terme, leur suppression conduisant à une perte sur l'information globale. Cette perte sur l'information globale ne peut être évaluée qu'avec la connaissance du degré d'intérêt subjectif porté par l'observateur à la quantité d'information portée par ces points. Ainsi si le niveau du signal de luminance de la tache à éliminer se trouve dans le domaine des niveaux des détails observés ou recherchés dans l'image par l'observateur, l'élimination de ces niveaux par le procédé précité ôte en définitive tout intérêt à l'image corrigée.

Le brevet français 2 157 701 décrit un dispositif de traitement d'un signal de télévision visant à corriger les défauts de netteté de l'image apportés entre autre par le dispositif d'analyse de l'image, par action sur les contours. Pour ce faire on élabore un signal d'image floue puis par comparaison avec le signal à traiter, un signal dit de contour que l'on ajoute au signal à traiter pour déterminer le signal corrigé.

La présente invention permet de remédier à l'inconvénient précédemment cité par mise en oeuvre d'une nouvelle technique de traitement d'images.

La présente invention a pour objet un procédé de traitement d'image définie par un ensemble de points représentés sur un écran et définis chacun par un signal de luminance de niveau déterminé, le procédé pour la mise en oeuvre d'un traitement d'un signal considéré comportant une étape de comparaison du niveau du signal de luminance $S(i, j)$ de chaque point considéré $P(i, j)$ de l'image et du niveau du signal de luminance $S(i-k, j-p)$ d'au moins un point $P(i-k, j-p)$ adjacent au point considéré avec établissement d'un signal de correction Sc et une étape de correction du niveau du signal de luminance de chaque point $P(i, j)$ par une sommation algébrique du niveau $S(i-k, j-p)$ du signal de luminance d'au moins un point $P(i-k, j-p)$ et du signal de correction Sc permettant ainsi d'établir un signal corrigé $Sc(i, j)$ pour chaque point considéré $P(i, j)$ le signal corrigé $Sc(i, j)$ ayant soit un niveau égal à la somme du niveau du signal de luminance $S(i-k, j-p)$ d'au moins un point adjacent et d'un niveau d'un signal de luminance de seuil $\Delta LSM$ du signal de correction Sc lorsque la différence du niveau du signal de luminance $S(i, j)$ du point $P(i, j)$ considéré et du niveau du signal de luminance d'au moins un point adjacent est positive et, en valeur absolue, supérieure à une valeur de seuil prédéterminée $\Delta LS$ soit un niveau égal à la différence du niveau du signal de luminance $S(i-k, j-p)$ d'au moins un point adjacent et d'un niveau d'un signal de luminance de seuil $\Delta LSm$ du signal de correction Sc lorsque la différence du niveau du signal de luminance $S(i, j)$ du point considèrè $P(i, j)$ et du niveau du signal de luminance d'au moins un point adjacent est négative et, en valeur absolue, supérieure à ladite valeur de seuil prédéterminée $\Delta LS$, les niveaux $\Delta LSM$ et $\Delta LSm$ du signal de correction ayant chacun pour valeur une valeur particulière de l'écart du signal de luminance de l'histogramme des écarts de signaux de luminance de deux points adjacents $P(i, j)$ et $P(i-k, j-p)$ de l'image, le signal traité conservant le niveau du signal de luminance S(i, j) du point P(i, j) considéré lorsque la différence des niveaux du signal de luminance S(i, j) pour le point P(i, j) et du signal de luminance pour un point adjacent est, en valeur absolue, inférieure à la dite valeur de seuil ΔLS.

La présente invention a également pour objet un dispositif de traitement d'image pour système de visualisation comportant un écran de tube cathodique sur lequel l'image est représentée par un ensemble de points définis chacun par un signal de luminance de niveau déterminé, le dispositif comportant, d'une part, des moyens de comparaison établissant un signal de correction Sc par comparaison du niveau du signal de luminance S(i, j) de chaque point considéré P(i, j) de l'image et du niveau du signal de luminance S(i — k, j — p) d'au moins un point P(i — k, j — p) adjacent au point considéré, et, d'autre part, des moyens de correction du signal de luminance du point P(i, j) considéré incluant des moyens de sommation algébrique du signal de correction Sc au niveau S(i — k, j — p) du signal de luminance d'au moins un point adjacent P(i — k, j — p) et des moyens de commutation délivrant pour le point P(i, j) considéré soit un signal corrigé Sc(i, j) de niveau égal à la somme du niveau du signal de luminance S(i — k, j — p) d'au moins un point adjacent et d'un niveau de signal de luminance de ·seuil ΔLSM du signal de correction Sc lorsque la différence du niveau du signal de luminance S(i, j) du point P(i, j) considéré et du niveau du signal de luminance d'au moins un point adjacent est positive et, en valeur absolue, supérieure à une valeur de seuil prédéterminée ΔLS soit un signal corrigé Sc(i, j) de niveau égal à la différence du niveau du signal de ·luminance S(i — k, j — p) d'au moins un point adjacent et d'un niveau de signal de luminance de seuil ΔLSm du signal de correction Sc lorsque la différence du niveau du signal de luminance du point considéré P(i, j) et du niveau du signal de luminance d'au moins un point adjacent est négative et, en valeur absolue, supérieure à la dite valeur de seuil ΔLS, les niveaux ΔLSM et ΔLSm du signal de correction ayant chacun pour valeur une valeur particulière de l'écart du signal de luminance de l'histogramme des écarts des signaux de luminance de deux points adjacents P(i, j) et P(i — k, j — p) de l'image, et délivrant un signal égal au signal de luminance S(i, j) du point considéré P(i, j) lorsque la différence des niveaux du signal de luminance S(i, j) du point P(i, j) et du signal de luminance S(i — k, j — p) d'au moins un point adjacent est, en valeur absolue, inférieure à la dite valeur du seuil ΔLS.

Le dispositif et le procédé selon l'invention ·sont utilisables dans tout dispositif de visualisation dans lequel l'image est représentée sur un écran de tube cathodique par un ensemble de points définis par un signal de luminance de niveau déterminé et en particulier dans les dispositifs d'appareils radiologiques, d'appareils de cartographie et de microscopes électroniques.

Le procédé et le dispositif objet de l'invention permettent d'augmenter la qualité de restitution du dispositif de visualisation par une correction plus fine du niveau de luminance de chaque point compte tenu du niveau de luminance d'au moins un point adjacent ou voisin. La correction pour un point considéré est effectuée compte tenu du niveau de luminance d'au moins un point voisin pour lequel le niveau de luminance, lorsque celui-ci est relatif à un niveau de détail, est conservé. Le niveau de luminance du point considéré est directement lié au niveau de luminance d'un point voisin, celui-ci conserve ainsi globalement, pour le point considéré et les points adjacents, l'expression du détail.

L'invention sera mieux comprise à l'aide de la description et des dessins ci-après dans lesquels les mêmes références désignent les mêmes éléments et où:

— la figure 1 représente un histogramme des différences de niveau de luminance point à point dans le cas d'une image très contrastée, l'axe des abscisses étant gradué symétriquement par rapport à l'origine o en écart de niveau de luminance, et, l'axe des ordonnées en nombre de points ou pixels par écart de niveau;

— la figure 2 représente une forme du niveau des signaux de luminance pour K points successifs d'une ligne d'ordre i;

— la figure 3 représente un schéma général de réalisation du dispositif objet de l'invention;

— les figures 4a, 4b et 4c représentent respectivement un détail de réalisation du circuit de la figure 3, une forme d'onde des signaux délivrés par ce circuit aux points de test A et B;

— la figure 5 et la figure 6 représentent un mode de réalisation particulier et un mode de réalisation préférentiel de l'objet de l'invention.

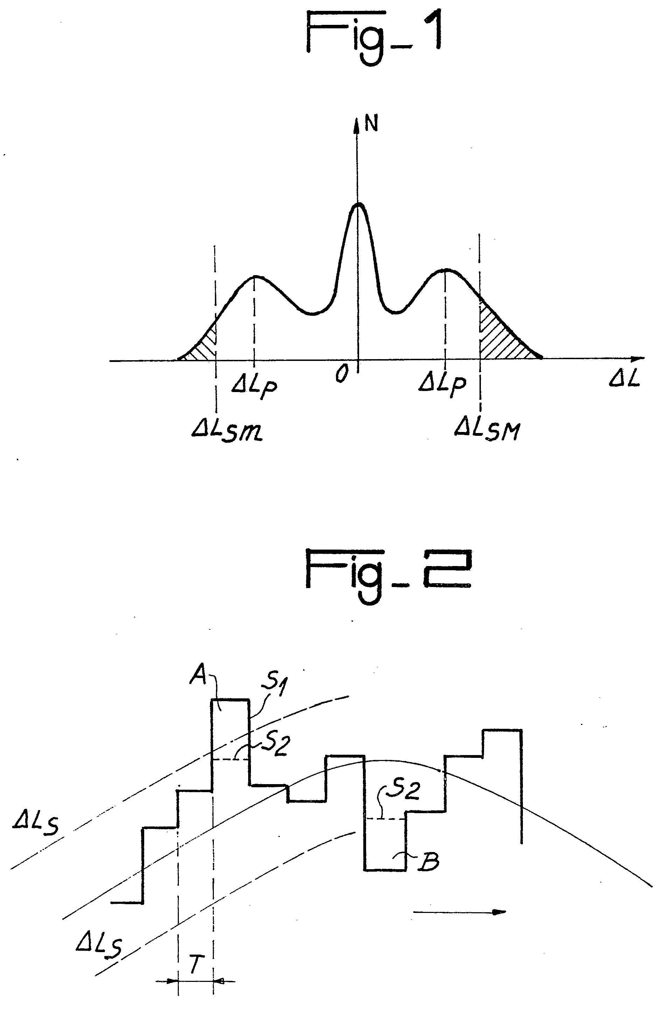

La figure 1 représente un histogramme des différences de niveau de luminance point à point, l'image étant définie par une analyse de type télévision. L'image est définie par un ensemble de points ou pixels dont le niveau de luminance est subdivisé en une somme de niveaux élémentaires discrets.

Selon la figure 1, la grandeur portée en abscisse est la différence entre les niveaux du signal de luminance pour un point considéré P(i, j) point de rang j de la ligne d'ordre i, et pour un point adjacent P(i — l, j) les références d'indexage des points croissant dans le sens de l'analyse de l'image. Cette différence varie de zéro à la valeur maximale du niveau positif ou négatif du signal. La grandeur portée en ordonnée est le nombre de points ou pixels. L'histogramme ainsi défini caractérise, pour chaque valeur de la différence de niveau de luminance, la distribution des couples de points dont les niveaux de luminance diffèrent d'une quantité donnée. Ainsi l'histogramme représenté figure 1 pour une image très contrastée, très fine et comportant de nombreux détails présente une distribution très étalée avec un maximum pour des écarts de luminance $\Delta Lp$ importants. La distribution est symétrique par rapport à l'axe des ordonnées, la différence de niveau, pour un sens d'analyse choisi, pouvent être positive ou négative. L'étude de l'image selon l'histogramme représenté sur la figure 1 permet d'introduire une notion d'entité d'espace-niveau par la définition de la valeur du niveau de luminance d'un point considéré P(i, j) par rapport à la valeur du niveau de luminance d'un point voisin P(i — l, j).

Selon l'invention, le procédé de traitement d'image définie par un ensemble de points consiste à effectuer d'abord une comparaison du niveau du signal de luminance S(i, j) de chaque point considéré P(i, j) de l'image et du niveau du signal de luminance S(i — k, j — p) d'au moins un point P(i — k, j — p) voisin ou adjacent au point considéré. Le point adjacent P(i — k, j — p) peut, par exemple être un point de la même ligne que le point P(i, j), en ce cas k = 0, ou un point d'une ligne voisine pour laquelle k prend la valeur de +1 ou la valeur —1 selon le cas. Dans le cas où le point choisi est un point d'une ligne voisine, k = ±1, p peut prendre les valeurs 0, +1, —1, définissant ainsi un ensemble de six points adjacents, trois points adjacents au niveau de chaque ligne voisine. Un intérêt de l'utilisation des points de lignes voisines est que leur bruit présente une meilleure décorrélation, vis-à-vis du bruit du point P(i, j) considéré, que le bruit des points adjacents portés par la ligne de ce point P(i, j). La précédente comparaison est suivie d'une étape de correction du niveau du signal de luminance de chaque point P(i, j) par une sommation algébrique d'un signal de correction Sc audit signal de luminance d'un point adjacent P(i — k, j — p). La correction permet d'établir un signal corrigé Sc(i, j) ayant soit un niveau égal à la somme due niveau du signal de luminance S(i — k, j — p) d'au moins un point adjacent et d'un niveau d'un signal de luminance de seuil $\Delta LSM$ du signal de correction lorsque la différence du niveau de luminance S(i, j) du point considéré P(i, j) et du niveau de luminance d'un point adjacent est positive et, en valeur absolue, supérieure à une valeur de seuil prédéterminée $\Delta LS$ soit un niveau égal à la différence du niveau du signal de luminance S(i — k, j — p) d'un point adjacent et d'un niveau de signal de luminance de seuil $\Delta LSm$ du signal de correction lorsque la différence du niveau de luminance du point considéré P(i, j) et du niveau de luminance d'un point adjacent est négative et, en valeur absolue, supérieure à ladite valeur de seuil prédéterminée $\Delta LS$. Les niveaux de signal de luminance $\Delta LSM$ et $\Delta LSm$ du signal de correction Sc ont chacun pour valeur une valeur particulière de l'écart de signal de luminance de l'histogramme des écarts de signaux de luminance de deux point adjacents P(i, j) et P(i — k, j — p) de l'image. Le niveau du signal de luminance S(i, j) pour le point P(i, j) considéré est conservé lorsque la différence des niveaux du signal de luminance pour le point P(i, j) considéré et pour un point adjacent est, en valeur absolue, inférieur à ladite valeur de seuil $\Delta LS$.

Les niveaux des signaux de luminance de seuil $\Delta LSM$ et $\Delta LSm$ du signal de correction Sc sont des valeurs qui corrigent convenablement la statistique de l'image associée à celle du bruit qui la perturbe ou des valeurs qui donnent une image satisfaisante à l'oeil suivant des critères visuels subjectifs. En particulier selon un mode préférentiel de réalisation de l'invention, ces niveaux $\Delta LSM$ et $\Delta LSm$ sont choisis de même valeur $\Delta Lp$. Selon la figure 1, le nombre de pixels ou points traités correspond aux zones hachurées de l'histogramme, la valeur $\Delta Lp$ de l'écart du signal de luminance correspondant à une valeur maximum de N sur l'histogramme.

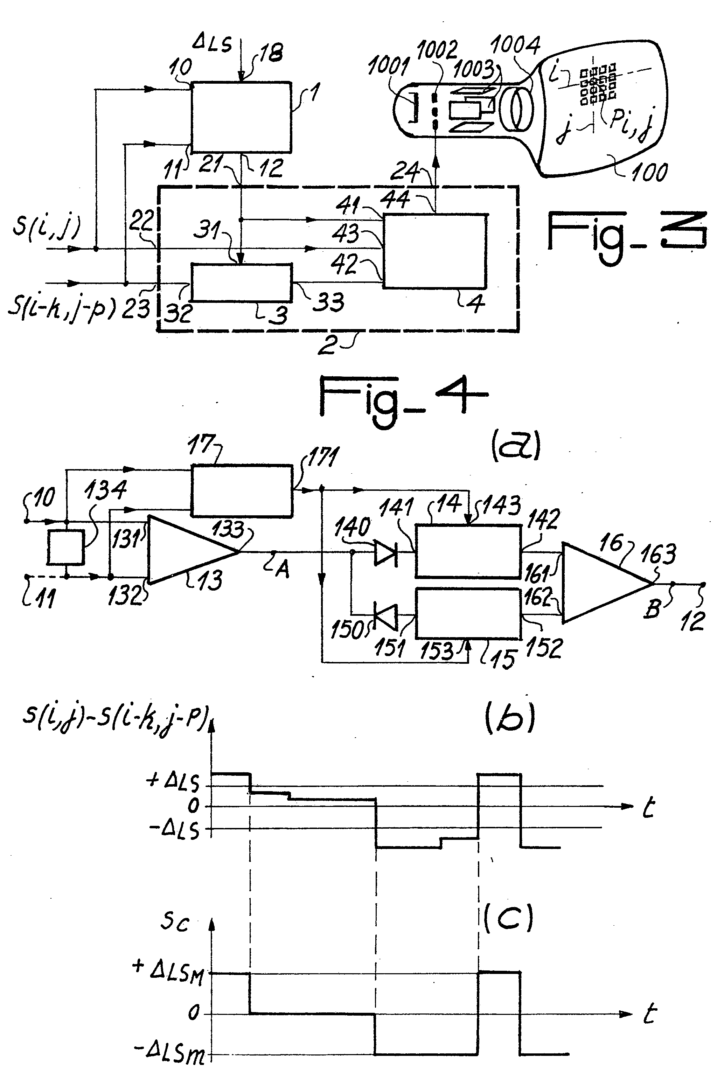

Une image traitée se trouve modifiée de la manière représentée selon la figure 2 dans laquelle S1, représenté en traits forts, figure le signal de luminance compte tenu de ses perturbations A et B. Le signal de luminance relatif à un point correspond à un signal vidéo fréquence constant pendant une durée T élémentaire. Le signal vidéo fréquence est par exemple égal à une somme de niveaux élémentaires discrets. Le traitement d'image agit à la fréquence de balayage des points, laissant inchangés les point peu contrastés et opérant un nivellement des pointes de signal, sans cependant les faire disparaître en totalité, tel que représenté par S2 en traits mixtes.

Selon un autre mode de réalisation de l'objet de l'invention, le point considéré P(i, j) peut être comparé soit au niveau du signal de luminance le plus élevé des points voisins, ce que permet d'augmenter l'amplitude du signal corrigé et le contraste entre deux pixels après correction, soit au niveau du signal de luminance le moins élevé ce qui réduit l'amplitude du signal corrigé et le contraste entre deux points après correction.

Selon un mode de réalisation préférentiel de l'objet de l'invention, le niveau du signal de luminance du point P(i, j) considéré est comparé au niveau du signal de luminance moyen S(i — k, j — p) des niveaux des signaux de luminance des points adjacents. La comparaison à la moyenne des niveaux des signaux de luminance des points adjacents permet, par la prise en considération d'un plus grand nombre de points de comparaison, d'effectuer un traitement par élément d'image ou ensemble de points adjacents.

L'expérimentation permet un choix entre les solutions précitées et une détermination des niveaux des signaux de luminance de seuil $\Delta LSm$, $\Delta LSM$ du signal de correction selon les caractéristiques relatives des statistiques de bruit et d'image et selon l'intérêt subjectif porté aux différents niveaux de l'image.

Le dispositif objet de l'invention représenté sur la figure 3 est un dispositif de traitement d'image pour système de visualisation comprenant un écran de tube cathodique 100 sur lequel l'image est représentée par un ensemble de points P(i, j) définis chacun par un signal de luminance de niveau déterminé. Le tube cathodique comportant les éléments classiques tels que canon à électrons 1001, électrode de Wehnelt 1002, dispositif de balayage d'écran par un faisceau électronique 1003 et électrode d'accélération 1004, reçoit sur son électrode de Wehnelt par exemple le signal de luminance modulant l'intensité du faisceau électronique et, par conséquent, le niveau de luminance de chacun des points engendrés par le dispositif de balayage d'écran 1003 selon une balayage du type télévision par exemple. Le dispositif selon l'invention comporte en outre d'une part des moyens 1 de comparaison du niveau du signal de luminance S(i, j) d'un point considéré P(i, j) de l'image et du niveau du signal de luminance S(i — k, j — p) d'au moins un point P(i — k, j — p) adjacent au point considéré. les moyens 1 de comparaison du niveau du signal S(i, j) et du niveau du signal S(i — k, j — p) comportent deux entrées 10 et 11 respectivement connectées à un circuit non représenté figure 1 et délivrant à chaque entrée 10 et 11 respectivement le signal de luminance de niveau S(i, j) pour le point considéré P(i, j) et le signal de luminance de niveau S(i — k, j — p) pour le point adjacent. Les moyens de comparaison 1 comportent une entrée 18 de réglage de seuil ΔLS et une sortie 12 délivrant un signal de correction Sc. Le dispositif objet de l'invention comporte d'autre part des moyens de correction 2 du niveau du signal de luminance S(i, j) du point P(i, j). Les moyens de correction 2 comprennent d'une part des moyens 3 de sommation algébrique du signal de correction Sc au niveau du signal de luminance S(i — k, j — p) d'au moins un point adjacent. Les moyens 3 de sommation comprennent une entrée 32 alimentée par le signal de luminance de niveau S(i — k, j — p) par la borne 23 des moyens de correction 2, une entrée 31 alimentée par le signal de luminance de correction Sc par la borne 21 des moyens de correction 2, et une sortie 33 délivrant un signal corrigé de niveau Sc(i, j). Les moyens de correction 2 comprennent d'autre part des moyens de commutation 4 délivrant, pour le point P(i, j) considéré, le signal S(i, j) qui a été traité. Ce signal correspond soit au signal corrigé Sc(i, j) dont le niveau égale la somme du niveau du signal de luminance S(i — k, j — p) d'au moins un point adjacent et d'un niveau d'un signal de luminance de seuil ΔLSM du signal de correction Sc lorsque la différence du niveau du signal de luminance du point P(i, j) considéré et du niveau du signal de luminance d'au moins un point adjacent est positive et, en valeur absolue, supérieure à la valeur de seuil prédéterminée ΔLS soit au signal corrigé Sc(i, j) dont le niveau égale la différence du niveau du signal de luminance d'au moins un point adjacent et d'un niveau d'un signal de luminance de seuil ΔLSm du signal de correction Sc lorsque la différence négative du niveau du signal de luminance du point considéré (P(i, j) et du niveau du signal de luminance d'au moins un point adjacent est negative et, en valeur absolue, supérieure à la valeur de seuil. Les niveaux de signal ΔLSM et ΔLSm du signal de correction ont chacun pour valeur une valeur particulière de l'écart du signal de luminance de l'histogramme des écarts des signaux de luminance de deux points adjacents P(i, j) et P(i — k, j — p) de l'image. Les valeurs d'écart de signal de luminance de l'histogramme des écarts de signaux de luminance de deux points adjacents sont part exemple données par un calculateur non représenté sur la figure 3. Le signal de luminance S(i, j) du point considéré P(i, j) n'est pas modifié lorsque la différence des niveaux du signal de luminance S(i, j) du point P(i, j) et celui d'un point adjacent est en valeur absolue inférieure à la dite valeur de seuil ΔLS.

L'histogramme de l'image est obtenu soit par mesure statistique pour un type d'image donné soit par un calculateur délivrant à partir de plusieurs images initiales un histogramme quasi instantané mis en mémoire sur une mémoire image.

Les moyens de commutation 4 comportent une première entrée 41 alimenté par la borne 21 des moyens de correction 2 par le signal de correction Sc, une deuxième entrée 42 connectée à la borne de sortie 33 des moyens de sommation 3 et recevant le signal corrigé Sc(i, j), une entrée 43 alimentée par le signal de luminance de niveau S(i, j) du point P(i, j) par l'intermédiaire d'une borne 22 des moyens de correction 2, et une sortie 44 délivrant le signal traité. La sortie 44 des moyens de commutation 4 est connectée à une borne de sortie 24 des moyens de correction 2 et délivre à l'éctrode de Wehnelt 1002 du tube de visualisation le signal de luminance SL correspondant au signal traité.

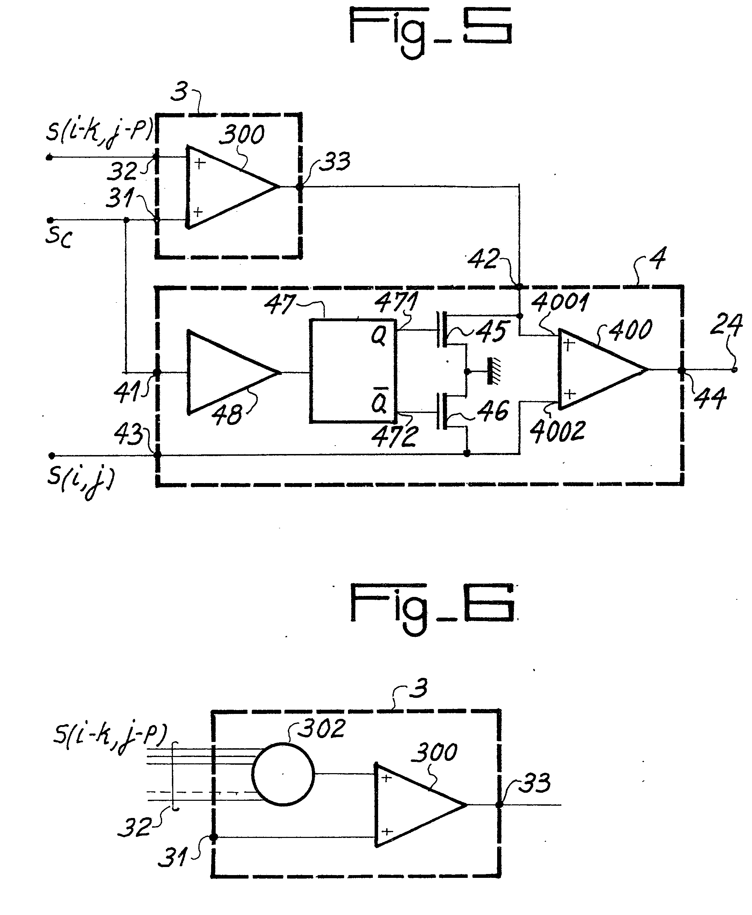

Les figures 4a et 4b représentent respectivement un mode de réalisation particulier des moyens 1 de comparaison des niveaux de signal de luminance S(i, j) du point considéré et S(i — k, j — p) d'au moins un point adjacent, et, une forme d'onde du signal de correction Sc délivrée par la sortie 12 des moyens 1 de comparaison. Selon la figure 4a, les moyens 1 de comparaison comportent un amplificateur différentiel 13 comprenant deux entrées 131 et 132 en mode différence. Chaque entrée 131, 132 est par exemple respectivement connectée à la borne d'entrée 10 et à la borne d'entrée 11 des moyens de comparaison 1. Les bornes 10 et 11 sont alimentées respectivement par le signal de luminance S(i, j) du point considéré P(i, j) et par le signal de luminance S(i — k, j — p). Selon une variante de réalisation également représentée sur la figure 4a, 1a borne 131 est

connectée à la borne 10 des moyens 1 de comparaison et alimentée par le signal de luminance S(i, j) et la borne 132 est également connectée à la borne 10 par l'intermédiaire d'une cellule à retard sans pertes 134. La cellule à retard 134 est, à titre d'exemple, constituée par un registre à transfert de charges. La cellule à retard transmet le signal de luminance S(i, j) avec un retard $\tau$ égal, par exemple, à la durée de balayage ligne lorsque le point adjacent choisi est le point P(i — l, j) pour k = 1 et p = 0. L'amplificateur différentiel 13 comporte une sortie 133 délivrant un signal égal à la différence de niveau du signal de luminance S(i, j) et du signal de luminance S(i — k, j — p). Les moyens de comparaison 1 comportent également un premier circuit 14 à seuil de déclenchment +$\Delta$LS et un deuxième circuit 15 à seuil de déclenchement —$\Delta$LS. Chaque circuit 14, 15 comporte respectivement une première entrée de déclenchement 141 et 151 connectée à la sortie 133 de l'amplificateur différentiel 13 par l'intermédiaire des diodes 140 et 150. Les diodes 140 et 150 ont un sens de conduction opposé. Chaque circuit 14, 15 comporte un sortie 142, 152 délivrant respectivement lors de leur déclenchement un échelon de tension positif d'amplitude $\Delta$LSM et un échelon de tension négatif d'amplitude $\Delta$LSm. L'amplitude $\Delta$LSM et $\Delta$LSm des échelons de tension délivrés par les circuits 14 et 15 est réglable par l'intermédiaire d'une deuxième entrée de commande 143 et 153. Les moyens de comparaison comportent en outre un amplificateur 16 comprenant deux bornes d'entrée 161 et 162. Les bornes d'entrée 161 et 162 sont reliées respectivement à la sortie 142 et à la sortie 152 des circuits à seuil de déclenchement 14 et 15. L'amplificateur 16 comporte une sortie 163 délivrant le signal de correction Sc.

Le fonctionnement du dispositif représenté sur la figure 4a est le suivant compte tenu des diagrammes des signaux délivrés par l'amplificateur différentiel 13 et représentés sur la figure 4b et des signaux dé correction Sc représentés sur la figure 4c. Le signal différence S(i, j) — S(i — k, j — p) lorsqu'il est supérieur ou inférieur en valeur algébrique respectivement à + $\Delta$LS et — $\Delta$LS entraîne le déclenchement du premier ou du deuxième circuit 14, 15. les échelons de tension correspondants $\Delta$LSM et $\Delta$LSm delivrés par chaque circuit sont délivrés par l'amplificateur 16. Le signal résultant correspondant au signal de correction Sc est représenté sur la figure 4c.

Selon un mode de réalisation préférentiel du dispositif objet de l'invention, le premier et le deuxième circuit 14, 15 délivrent respectivement, lors de leur déclenchement, un échelon de tension de même amplitude $\Delta$LSM = $\Delta$LSm de valeur égale à la valeur $\Delta$Lp de l'écart de signal de luminance correspondant à un maximum de N sur l'histogramme des écarts de signaux de luminance de deux points adjacents de l'image. A cet effet les entrées respectives 143 et 153 des circuits 14 et 15 sont connectées à un calculateur 17 délivrant une tension de réglage proportionnelle à la valeur $\Delta$Lp de l'écart de luminance correspondant.

Selon la figure 5, les moyens de sommation 3 des moyens 2 de correction du niveau du signal de luminance comportent un amplificateur sommateur 300. L'amplificateur sommateur 300 comprend d'une part une première et une deuxième entrée alimentées respectivement par le signal de luminance S(i — k, j — p) d'un point adjacent et par le signal de correction Sc délivré par l'amplificateur 16, par l'intermédiaire des bornes 32 et 31 des moyens de sommation 3. L'amplificateur sommateur 300 comporte une sortie reliée à la sortie 33 des moyens de sommation 3 et délivre le signal corrigé Sc(i, j). Les moyens 4 de commutation du signal corrigé Sc(i, j) comprennent, selon la figure 5, un amplificateur sommateur 400 comportant deux bornes d'entrée 4001 et 4002 connectées respectivement à la borne d'entrée 42 et à la borne d'entrée 43 des moyens 4 de commutation du signal corrigé. les moyens 4 de commutation comprennent de plus un interrupteur 45 et un interrupteur 46 connectés respectivement en parallèle entre les entrées 4001 et 4002 et une tension de référence du dispositif. les interrupteurs comportent chacun une entrée de commande et sont constitués, par exemple, par des transistors à effet de champ. Les moyens 4 de commutation du signal corrigé comportent un circuit différentiateur 48 et une bascule bistable 47 dont l'entrée de déclenchement est connectée à la sortie du circuit différentiateur 48. L'entrée du circuit différentiateur est connectée à l'entrée 41 des moyens 4 de commutation et reçoit le signal de correction Sc. La bascule bistable 47 comporte une première et une deuxième sortie 471, 472 complémentées. La première sortie 471 est reliée à l'entrée de commande de l'interrupteur 45 et la deuxième sortie 472 est reliée à l'entrée de commande de l'interrupteur 46. En fonctionnement, chaque interrupteur commandé par le signal de correction Sc commute en alternance les bornes d'entrée de l'amplificateur sommateur 400 à la tension de référence du dispositif. La sortie de l'amplificateur 400 connectée à la borne de sortie 44 des moyens 4 de commutation est connectée à la borne de sortie 24 des moyens de correction 2 et délivre le signal traité ST égal soit au signal corrigé Sc(i, j) soit au signal S(i, j) inchangé.

Selon un mode de réalisation préférentiel représenté sur la figure 6, l'amplificateur sommateur 300 comporte connecté à sa première entrée un calculateur 302 recevant les informations de niveau de luminance d'une pluralité de points adjacents P(i — k, j — p). Le calculateur 302 délivre un signal représentatif de la valeur moyenne des niveaux des signaux de luminance des points adjacents à la de réalisation de l'objet de l'invention, le calculateur 302 peut par exemple être un calculateur numérique auquel est connecté en cascade un convertisseur numérique analogique. Tout mode de réalisation mettant en oeuvre un calculateur analogique et une définition analogique des niveaux des signaux de luminance ne sort pas du cadre de l'objet de la présente invention.

Selon un autre mode de réalisation de l'objet de l'invention, le traitement d'image est tel que la correction du signal de luminance est effectuée à partir du signal de luminance d'un point adjacent d'amplitude maximale ou d'amplitude minimale $<S(i-k, j-p)>$. Cette solution permet un traitement des valeurs des signaux de luminance très élevées ainsi que le traitement des valeurs des signaux de luminance très basses. Dans ce cas le calculateur 302 délivre à la première entrée de l'amplificateur sommateur 300 un signal proportionnel à l'amplitude maximale ou à l'amplitude minimale des signaux de luminance des points adjacents, le calculateur effectuant la comparaison des amplitudes relatives des signaux de luminance des points adjacents au point considéré $P(i, j)$.

Le procédé et le dispositif de traitement d'image selon l'invention permettent également, par la possibilité de régale de l'écart du signal de luminance $\Delta LSM$, $\Delta LSm$ maximum admissible entre deux points adjacents, de moduler l'efficacité due traitement. Les valeurs d'écart du signal de luminance $\Delta LSM$ et $\Delta LSm$ peuvent être modifiées en fonction du niveau du signal de luminance dans le cas d'une image qui comporte un bruit de fluctuation important. Dans ce cas le calculateur 17 représenté sur la figure 4a délivre aux deuxièmes entrées de commande 143 et 153 des circuits à seuil de déclenchement 14 et 15 un signal de réglage du niveau du signal de correction Sc par le réglage de l'amplitude des signaux délivrés par les circuits 14 et 15. Il est ainsi possible de moduler le niveau du signal de correction Sc en fonction de la connaissance de l'histogramme des écarts des signaux de luminance des points adjacents au point considéré et de l'histogramme des écarts des signaux de luminance de l'image globale. Le calculateur 17 délivre en sa sortie 171 un signal de réglage du niveau du signal de correction Sc choisi en ce cas égal à l'écart du signal de luminance moyen de l'histogramme des écarts des signaux de luminance des points adjacents au point $P(i, j)$. La valeur de l'écart du signal de luminance moyen est déterminée par exemple par le calculateur 17 connecté aux bornes du dispositif délivrant des signaux $S(i, j)$ et $S(i-k, j)$ par exemple. Tout dispositif mettant en oeuvre un microprocesseur dans le but de remplacer les calculateurs 17 et 302 ne sort pas due cadre de la présente invention. Le calculateur 17 et le calculateur 302 peuvent être constitués par une même unité de calcul. Le disposiitif précité permet ainsi une correction par zone de luminance et il est possible, en particulier par le procédé de traitement précité, de réduire les scintillations importantes d'une image très éclairée selon une loi choisie afin de faciliter l'observation de plages peu éclairées contigües dont le niveau relatif de luminance est inférieur au niveau de la perturbation de la plage éclairée.

**Revendications**

1. Procédé de traitement d'image définie par un ensemble de points représentés sur un écran et définis chacun par un signal de luminance de niveau déterminé, comprenant une etape de comparaison du niveau du signal de luminance $S(i, j)$ de chaque point considéré $P(i, j)$ de l'image et du niveau du signal de luminance $S(i-k, j-p)$ d'au moins un point $P(i-k, j-p)$ adjacent au point considéré, avec établissement d'un signal de correction Sc et une etape de correction pendant laquelle le signal de correction Sc est ajouté algébriquement au signal de luminance $S(i-k, j-p)$ pour établir un signal corrigé $Sc(i, j)$ pour chaque point considéré $P(i, j)$ caractérisé par le fait que le signal corrigé $Sc(i, j)$ a soit un niveau égal à la somme du niveau du signal de luminance $S(i-k, j-p)$ d'au moins un point adjacent et d'un niveau d'un signal de luminance de seuil $\Delta LSM$ du signal de correction Sc lorsque la différence du niveau du signal de luminance $S(i, j)$ du point considéré $P(i, j)$ et du niveau du signal de luminance d'au moins un point adjacent est positive et, en valeur absolue, supérieure à une valeur de seuil prédéterminée $\Delta LS$, soit un niveau égal à la différence du niveau du signal de luminance $S(i-k, j-p)$ d'au moins un point adjacent et d'un niveau d'un signal de luminance de seuil $\Delta LSm$ du signal de correction Sc lorsque la différence du niveau du signal de luminance $S(i, j)$ du point considéré $P(i, j)$ et du niveau du signal de luminance d'au moins un point adjacent est négative et en valeur absolue, supérieure à ladite valeur de seuil prédéterminée $\Delta LS$, les niveaux $\Delta LSM$ et $\Delta LSm$ du signal de correction ayant chacun pour valeur une valeur particulière de l'écart du signal de luminance de l'histogramme des écarts des signaux de luminance de deux points adjacents $P(i, j)$ et $P(i-k, j-p)$ de l'image, et que le signal traité conserve le niveau du signal de luminance $S(i, j)$ du point $P(i, j)$ considéré lorsque la différence des niveaux du signal de luminance $S(i, j)$ pour le point $P(i, j)$ considéré et pour un point adjacent est, en valeur absolue, inférieure à ladite valeur de seuil $\Delta LS$.

2. Procédé de traitement d'image selon la revendication 1, caractérisé en ce que les niveaux des signaux de luminance de seuil $\Delta LSM$ et $\Delta LSm$ ont une même valeur.

3. Procédé selon la revendication 1, caractérisé en ce que le niveau du signal de luminance $S(i - k, j - p)$ d'au moins un point adjacent au point considéré $P(i, j)$ est le niveau moyen $\overline{S(i - k, j - p)}$ des niveaux des signaux de luminance de plusieurs points adjacents.

4. Procédé selon la revendication 2, caractérisé en ce que la valeur commune des niveaux des signaux de luminance de seuil $\Delta LSM$ et $\Delta LSm$ est égale à l'écart du signal de luminance correspondant à une valeur maximum de l'histogramme des écarts des signaux de luminance de points adjacents au point considéré $P(i, j)$.

5. Dispositif de traitement d'image pour système de visualisation comprenant un écran de tube cathodique sur lequel l'image est représentée par un ensemble de point $P(i, j)$ définis chacun par un signal de luminance de niveau détermine, des moyens de comparaison (1) établissant un signal de correction Sc par comparaison du niveau du signal de luminance $S(i, j)$ de chaque point considéré $P(i, j)$ de l'image et du niveau du signal de luminance $S(i - k, j - p)$ d'au moins un point $P(i - k, j - p)$ adjacent au point considéré, et des moyens de correction (2) du niveau du signal de luminance du point $P(i, j)$ considéré incluant des moyens de sommation algébrique (3) du signal de correction Sc au niveau $S(i - k, j - p)$ du signal de luminance d'au moins un point adjacent $P(i - k, j - p)$, caractérisé en ce que les moyens de correction (2) comprennent, outre les moyens de sommation algébrique (3), des moyens de commutation (4) qui, délivrent pour le point $P(i, j)$ considéré soit un signal corrigé $Sc(i, j)$ de niveau égal; à la somme du niveau du signal de luminance $S(i - k, j - p)$ d'au moins un point adjacent et d'un niveau de signal de luminance de seuil $\Delta LSM$ du signal de correction Sc lorsque la différence du niveau du signal de luminance $S(i, j)$ du point $P(i, j)$ considéré et du niveau du signal de luminance d'au moins un point adjacent est positive et en valeur absolue, supérieure à une valeur de seuil prédéterminée $\Delta LS$ soit un signal corrigé $Sc(i, j)$ de niveau égal à la différence du niveau du signal de luminance $S(i - k, j - p)$ d'au moins un point adjacent et d'un niveau de signal de luminance de seuil $\Delta LSm$ du signal de correction Sc lorsque la différence du niveau du signal de luminance du point $P(i, j)$ considéré et du niveau du signal de luminance d'au moins un point adjacent est négative et, en valeur absolue, supérieure à ladite valeur de seuil $\Delta LS$, les niveaux de signal de luminance $\Delta LSM$ et $\Delta LSm$ du signal de correction ayant chacun pour valeur une valeur particulière de l'écart du signal de luminance de l'histogramme des écarts des signaux de luminance de deux points adjacents $P(i, j)$ et $P(i - k, j - p)$ de l'image, et qui délivrant un signal égal au signal de luminance $S(i, j)$ du point considéré $P(i, j)$ lorsque la différence des niveaux du signal de luminance $S(i, j)$ du point $P(i, j)$ et du signal de luminance d'au moins un point adjacent est, en valeur absolue, inférieure à la dite valeur de seuil $\Delta LS$.

6. Dispositif selon la revendication 5, caractérisé en ce que lesdits moyens de comparaison (1) du niveau du signal de luminance $S(i, j)$ du point considéré $P(i, j)$ et du niveau du signal de luminance d'un point adjacent $P(i - k, j - p)$ comprennent:
— un amplificateur différentiel (13) comprenant deux entrées (131 et 132) en mode différence respectivement connectées à la borne d'entrée (10 et 11) des moyens de comparaison (1) et alimentées respectivement par le signal de luminance $S(i, j)$ du point considéré $P(i, j)$ et par le signal de luminance $S(i - k, j - p)$, et une sortie (133) délivrant un signal égal à la différence de niveau du signal de luminance $S(i, j)$ et du signal de luminance $S(i - k, j - p)$;
— un premier circuit à seuil de déclenchement (14) et un deuxième circuit à seuil de déclenchement (15) comprenant respectivement une première entrée de déclenchement (141, 151) et une sortie (142, 152), lesdites entrées étant connectées chacune à la sortie (133) de l'amplificateur différentiel et la sortie (142, 152) de chaque circuit à seuil de déclenchement délivrant respectivement lors de leur déclenchement un échelon de tension positif et un échelon de tension négatif d'amplitude respective $\Delta LSM$ et $\Delta LSm$;
— un amplificateur (16) comprenant deux bornes d'entrée (161, 162) et une borne de sortie (163), les bornes d'entrée (161 et 162) de l'amplificateur sommateur étant reliées respectivement à la sortie (142) et à la sortie (152) des circuits (14 et 15) et la sortie (163) de l'amplificateur (16) délivrant le signal de correction Sc.

7. Dispositif selon la revendication 6, caractérisé en ce que ledit premier circuit à seuil (14) et le deuxième circuit à seuil (15) délivrent respectivement lors de leur déclenchement un échelon de tension de même amplitude $\Delta LSM = \Delta LSm$.

8. Dispositif selon la revendication 5, caractérisé en ce que lesdits moyens de sommation (3) des moyens de correction (2) du niveau du signal de luminance comportent un amplificateur sommateur (300) comportant, d'une part, une première et une deuxième entrée alimentées respectivement par le signal de luminancè $S(i - k, j - p)$ d'un point adjacent et par le signal de correction Sc délivré par l'amplificateur (16), et, d'autre part, une sortie (33) délivrant le signal corrigé $Sc(i, j)$.

9. Dispositif selon la revendication 5, caractérisé en ce que lesdits moyens (4) de commutation comprennent:
— un amplificateur sommateur (400) comprenant deux bornes d'entrée (4001 et 4002) respectivement connectées à la borne d'entrée (42 et 43) des moyens (4) de commutation;

— deux interrupteurs (45 et 46) connectés en parallèle respectivement entre les entrées (4001 et 4002) et une tension de référence du dispositif, lesdits interrupteurs comportant chacun une entrée de commande;

— une bascule bistable (47) et un circuit différentiateur (48), ledit circuit différentiateur (48) comportant une entrée connectée à l'entrée (41) des moyens de commutation (4) et recevant le signal de correction Sc, et une sortie connectée à une entrée de déclenchement de la bascule bistable (47), ladite bascule bistable (47) comportant une première et une deuxième sortie (471, 472) complémentées, ladite première sortie (471) étant reliée à l'entrée de commande de l'un des interrupteur (45) et ladite deuxième sortie (472) étant relié à l'entrée de commande de l'autre interrupteur (46), chaque interrupteur (45 et 46) commutant en alternance les bornes d'entrée de l'amplificateur sommateur (400).

10. Dispositif selon la revendication 8, caractérisé en ce que l'amplificateur sommateur (300) faisant partie des moyens de sommation (3) comporte, connecté à sa première entrée, un calculateur (302) recevant les informations de niveau de luminance d'une pluralité de points adjacents $P(i-k, j-p)$ et délivrant à ladite entrée un signal représentatif de la valeur moyenne des niveaux de luminance desdits points adjacents.

11. Dispositif selon la revendication 6, caractérisé en ce que ledit premiere circuit à seuil (14) et le deuxième circuit à seuil (15) comportent chacun une deuxième entrée de commande (143 et 153), ledit dispositif comportant en outre un calculateur (17) dont la sortie (171) est connectée auxdites deuxièmes entrées de commande (143 et 153) des circuits à seuil délivre auxdites entrées de commande un signal de réglage du niveau du signal de correction Sc choisi égal à l'écart de signal de luminance de points adjacents au point considéré $P(i, j)$.

**Patentansprüche**

1. Verfarhen zur Behandlung eines durch eine Veilzahl von auf einem Bildschirm erscheinenden, von durch je ein Helligkeitssignal mit bestimmtem Pegel definierten Bildpunkten erzeugten Bildes, bei dem in einem Vergleichsvorgang der Pegel des Helligkeitssignals $S(i, j)$ jedes betreffenden Bildpunktes $P(i, j)$ dieses Bildes mit dem Pegel des Helligkeitssignals $S(i-k, j-p)$ wenigstens eines dem betreffenden Punkt benachbarten Punktes $P(i-k, j-p)$ bei gleichzeitiger Erzeugung eines Korrektursignals Sc verglichen wird, während in einem Korrekturvorgang das Korrektursignal Sc algebraisch mit dem Helligkeitssignal $S(i-k, j-p)$ zwecks Erzeugung eines korrigierten Signals $Sc(i, j)$ für jeden betreffenden Bildpunkt addiert wird, dadurch gekennzeichnet, dass der Pegel des korrigierten Signals $Sc(i, j)$ entweder gleich der Summe des Pegels des Helligkeitssignals $S(i-k, j-p)$ wenigstens eines benachbarten Bildpunktes und eines Pegels eines Grenzwerthelligkeitssignals $\Delta LSM$ des Korrektursignals Sc ist, wenn die Differenz zwischen dem Pegel des Helligkeitssignals $S(i, j)$ des betreffenden Bildpunktes $P(i, j)$ und dem Pegel des Helligkeitssignals wenigstens eines benachbarten Bildpunktes positiv und, in absolutem Wert ausgedrückt, grösser ist als ein vorgegebener Grenzwert $\Delta LS$, oder aber gleich der Differenz zwischen dem Pegel des Helligkeitssignals $S(i-k, j-p)$ wenigstens eines benachbarten Bildpunktes und einem Grenzwerthelligkeitssignalpegel $\Delta LSm$ des Korrektursignals Sc ist, wenn die Differenz zwischen dem Pegel des Helligkeitssignals $S(i, j)$ des betreffenden Bildpunktes $P(i, j)$ und dem Pegel des Helligkeitssignals wenigstens eine benachbarten Bildpunktes negativ und in absolutem Wert ausgedrückt, grösser ist als der genannte Grenzwert $\Delta LS$, wobei der jeweilige Pegel $\Delta LSM$ und $\Delta LSm$ des Korrektursignals einen Wert besitzt, der einem bestimmten Abweichungswert des Helligkeitssignals im Histogramm der Abweichungen der Helligkeitssignale zweier benachbarter Bildpunkte $P(i, j)$ und $P(i-k, j-p)$ entspricht, und dass das behandelte Signal den Pegel des Helligkeitssignals $S(i, j)$ des betreffenden Bildpunktes $P(i, j)$ beibehält, wenn die Differenz zwischen den Pegeln des Helligkeitssignals $S(i, j)$ des betreffenden Bildpunktes $P(i, j)$ und eines benachbarten Bildpunktes in absolutem Wert ausgedrückt niedriger ist, als der genannte Grenzwert $\Delta LS$.

2. Bildbehandlungsverfahren nach Anspruch 1, dadurch gekennzeichnet, dass die der Grenzwerthelligkeitssignalpegel $\Delta LSM$ und $\Delta LSm$ gleich sind.

3. Verfahren nach Anspruch 1, dadurch gekennzeichnet, dass der Pegel des Helligkeitssignals $S(i-k, j-p)$ wenigstens eines dem betreffenden Bildpunkt $P(i, j)$ benachbarten Bildpunktes dem Mittelwert $S(i-k, j-p)$ der Pegel der Helligkeitssignale mehrerer benachbarter Bildpunkte entspricht.

4. Verfahren nach Anspruch 2, dadurch gekennzeichnet, dass der gemeinsame Pegelwert der Grenzwerthelligkeitssignale $\Delta LSM$ und $\Delta LSm$ gleich der Abweichung des Helligkeitssignals ist, die einem Maximalwert des Histogramms der Abweichungen der Helligkeitssignale der dem betreffenden Bildpunkt $P(i, j)$ benachbarten Bildpunkte entspricht.

5. Vorrichtung zur Behandlung eines Bildes in einem Bildübertragungssystem mit einem Kathodenstrahlröhren-Bildschirm auf welchem das bild durch eine Vielzahl, von durch je ein Helligkeitssignal mit bestimmtem Pegel definierten Bildpunkten $P(i, j)$ erzeugt wird, mit Vergleichsmitteln (1) die durch Vergleichen des Pegels des Helligkeitssignals S(i, j) jedes der betreffenden Bildpunkte P(i, j) mit dem Pegel des Helligkeitssignals S(i — k, j — p) wenigstens eines dem betreffenden Bildpunkt P(i, j) benachbarten Bildpunktes P(i — k, j — p) ein Korrektursignal Sc erzeugen, sowie mit Korrekturmitteln (2) zum Korrigieren des Pegels des Helligkeitssignals Sw des betreffenden Bildpunktes P(i, j), welche algebraische Addiermittel (3) zum Addieren des Korrektursignals Sc mit dem Pegel S(i — k, j — p) des Helligkeitssignals wenigstens eines benachbarten Bildpunktes P(i — k, j — p) aufweisen, dadurch gekennzeichnet, dass die Korrekturmittel (2) ausser den algebraischen Addiermitteln (3) Schaltmittel (4) besitzen, die für den betreffenden Bildpunkt P(i, j) entweder ein korrigiertes Signal Sc(i, j) erzeugen, dessen Pegel gleich der Summe des Pegels des Helligkeitssignales S(i — k, j — p) wenigstens eines benachbarten Bildpunktes und eines Grenzwertsignalpegels ΔLSM des Korrektursignals Sc ist, wenn die Differenz zwischen dem pegel des Helligkeitssignals S(i, j) des betreffenden Bildpunktes P(i, j) und dem Pegel des Helligkeitssignals wenigstens benachbarten Bildpunktes positiv und, in absolutem Wert ausgedrückt, höher ist, als ein vorbestimmter Grenzwert ΔLS, oder aber ein korrigiertes Signal Sc(i, j) erzeugen, dessen Pegel gleich der Differnz zwischen dem Pegel des Helligkeitssignals S(i — k, j — p) wenigstens eines benachbarten Bildpunktes und einem Grenzwertsignalpegel ΔLSm des Korrektursignals Sc ist, wenn die Differenz zwischen dem Pegel des Helligkeitssignals des betreffenden Bildpunktes P(i, j) und dem Pegel des Helligkeitssignals wenigstens eines benachbarten Bildpunktes negativ und, in absolutem Wert ausgedrückt, höher ist, als der genannte Grenzwert ΔLS, wobei die Helligkeitssignalpegel ΔLSM und ΔLSm des Korrektursignal je einen Wert besitzen, der einem bestimmten Wert der Abweichung des Helligkeitssignals vom Histogramm der Abweichungen der Helligkeitssignale zweier benachbarter Bildpunkte P(i, j) und P(i — k, j — p) entspricht und wobei die Schaltmittel ein dem Helligkeitssignal S(i, j) des betreffenden Bildpunktes P(i, j) gleiches Signal erzeugen, wenn die Differenz zwischen des Pegeln des Helligkeitssignals S(i, j) des Bildpunktes P(i, j) und des Helligkeitssignals wenigstens eines benachbarten Bildpunktes in absolutem Wert ausgedrückt niedriger ist, als der gennante Grenzwert ΔLS.

6. Vorrichtung nach Anspruch 5, dadurch gekennzeichnet, dass die Vergleichmittel (1) zum Vergleichen des Pegels des Helligkeitssignals S(i, j) des betreffenden Bildpunktes P(i, j) mit dem Pegel des Helligkeitssignals eines benachbarten Punktes P(i — k, j — p) folgende Teile umfassen:
— einen Differantialverstärker (13) in Differenzschaltung mit zwei Eingangsanschlüssen (131 und 132), die mit der Eingangsklemme (10 bzw. 11) der Vergleichsmittel (1) verbunden und mit dem Helligkeitssignal S(i, j) des betreffenden Bildpunktes P(i, j) bzw. mit dem Helligkeitssignal S(i — k, j — p) gespeist werden, sowie mit einem Ausgangsanschluss (133), der ein Signal abgibt, welches gleich der Differenz zwischen dem Pegel des Helligkeitssignals S(i, j) und dem Pegel des Helligkeitssignals S(i — k, j — p) ist;
— einen ersten Grenzwertauslösungsstromkreis (14) und einen zweiten Grenzwertauslösungsstromkreis (15), deren jeder einen ersten Auslösungs-Eingangsanschluss (141, 151) und einen Ausgangsanschluss (142, 152) besitzt wobei jeder dieser Eingangsanschlüsse mit dem Ausgangsanschluss (133) des Differentialverstärkers verbunden ist und der Ausgangsanschluss (142, 152) jedes Grenzauslösungsstromkreises bei Betätigung eine positive Stufenspannung und eine negative Stufenspannung mit einer Amplitude von ΔLSM bzw. ΔLSm abgibt;
— einen zwei Eingangsklemmen (161, 162) und eine Ausgangsklemme (163) aufweisenden Verstärker (16), dessen Eingangsklemmen (161 und 162) an den Ausgangsanschluss (142) bzw. an den Ausgangsanschluss (152) der Stromkreise (14 bzw. 15) angeschlossen sind, wobei der Ausgangsanschluss (163) des Verstärkers (16) das Korrektursignal Sc abgibt.

7. Vorrichtung nach Anspruch 6, dadurch gekennzeichnet, dass der erste Grenzwertauslösungsstromkreis (14) und der zweite Grenzwertauslösungsstromkreis (15) bei Betätigung je eine Stufenspannung gleicher Amplitude ΔLSM = ΔLSm abgeben.

8. Vorrichtung nach Anspruch 5, dadurch gekennzeichnet, dass die Addiermittel (3) der Korrekturmittel (2) zum Korrigieren des Helligkeitssignalpegels einen Addierverstärker (300) beumfangen, welcher einerseits einen ersten und einen zweiten das Helligkeitssignal S(i — k, j — p) eines benachbarten Bildpunktes bzw. das vom Verstärker (16) erzeugte Korrektursignal Sc Eingangsanschluss und anderseits einen das korrigierte Signal Sc(i, j) abgebenden Ausgangsanschluss aufweist.

9. Vorrichtung nach Anspruch 5, dadurch gekennzeichnet, dass die Schaltmittel (4) folgende Teile umfassen:
— einen Addierverstärker (400) mit zwei Eingangsklemmen (4001 und 4002) die mit je einer der Eingangsklemmen (42 und 43) der Shcaltmittel (4) verbunden sind;
— zwei Schalter (45 und 46), die parallel zwischen je einem Eingangsanschluss (4001 bzw. 4002) und einer Bezugsspannung der Vorrichtung liegen, wobei jeder dieser Schalter einer Betätigungseingangsanschluss besitzt;
— eine bistabile Kippschaltung (47) und eine Differenzierungsschaltung (48), wobei der letztere einen an den Eingangsanschluss (41) der Schaltmittel (4) angeschlossenen, das Korrektursignal Sc empfangende Eingangsanschluss, sowie einen mit einem Betätigungseingangsanschluss der bistabilen Kippschaltung (47) verbundenen Ausgangsanschluss besitzt, während die bistabile Kippschaltung (47) einen ersten und einen zweiten Komplementarausgangsanschluss (471, 472) besitzt und der erste Ausgangsanschluss (471) mit dem Betätigungseingangsanschluss einer der Schalter (45) verbunden ist, wohingegen der zweite Ausgangsanschluss (472) mit dem Betätigungseingangsanschluss des anderen Schalters (46) verbunden ist und beide Schalter (45 und 46) abwechselnd die Eingangsklemmen des Addierverstärkers (400) umschalten.

10. Vorrichtung nach Anspruch 8, dadurch gekennzeichnet, dass der Addierverstärker (300) der Addiermittel (3) eine mit seinem ersten Eingangsanschluss verbundene Rechenschaltung (302) besitzt, welche die Informationen bezüglich des Pegels einer Vielzahl benachbarter Bildpunkte $P(i - k, j - p)$ empfängt und an den genannten Eingangsanschluss ein Signal abgibt, das den Mittelwert der Helligkeitssignalpegel dieser benachbarten Bildpunkte darstellt.

11. Vorrichtung nach Anspruch 6, dadurch gekennzeichnet, dass die erste bistabile Grenzwert-Kippschältung (14) und die zweite bistabile Grenwert-Kippschaltung (15) je einen zweiten Betätigungseingangsanschluss (143 und 153) besitzen, wobei die Vorrichtung ferner eine Rechenschaltung (17) aufweist, deren Ausgangsanschluss (171) mit den zweiten Betätigungseingangsanschlüssen (143 und 153) der Grenzwert-Kippschaltungen verbunden ist und an diese Betätigungseingangsanschlüsse ein Reguliersignal zum Einstellen des gewählten Pegels des Korrektursignals Sc abgibt, welcher der Abweichung der Helligkeitssignale der dem betreffenden Bildpunkt $P(i, j)$ benachbarten Bildpunkte gleich ist.

**Claims**

1. Method of processing an image defined by a plurality of spots represented on a screen and defined each by a luminance signal having a determined luminance level, comprising a step of comparing the level of the luminance signal $S(i, j)$ of each considered spot $P(i, j)$ of the image to the level of the luminance signal $S(i - k, j - p)$ of at least one spot $P(i - k, j - p)$ adjacent to the considered spot, while establishing a correction signal Sc, and a correction step during which the correction signal Sc is added algebraically to the luminance signal $S(i - k, j - p)$ with a view to establishing a corrected signal $Sc(i, j)$ for each considered spot $P(i, j)$, characterized in that the level of the corrected signal $Sc(i, j)$ is either equal to the sum of the level of the luminance signal $S(i - k, j - p)$ of at least one adjacent spot and a threshold luminance signal level $\Delta LSM$ of the correction signal Sc when the difference between the level of the luminance signal $S(i, j)$ of the considered spot $P(i, j)$ and the level of the luminance signal of at least one adjacent spot is positive and has, expressed in absolute value, a value higher than a predetermined threshold value $\Delta LS$, or equal to a level equalling the difference between the level of the luminance signal $S(i - k, j - p)$ of at least one adjacent spot and a threshold luminance signal of $\Delta LSm$ of the correction signal Sc when the difference between the level of the luminance signal $S(i, j)$ of the considered spot $P(i, j)$ and the level of the luminance signal of at least one adjacent spot is negative and, expressed in absolute value, higher than said predetermined threshold value $\Delta LS$, the levels $\Delta LSM$ and $\Delta LSm$ of the correction signal having each a particular value of the divergence of the luminance signal from the histogram of the divergences of the luminance signals of two adjacent spots $P(i, j)$ and $P(i - k, j - p)$ of the image, and in that the level of the processed signal remains equal to the level of the luminance signal $S(i, j)$ of the considered spot $P(i, j)$ when the difference between the luminance signal levels $S(i, j)$ at the considered spot $P(i, j)$ and an adjacent spot, expressed in absolute value is lower than said pressure value $\Delta LS$.

2. Method for processing an image according to claim 1, characterized in that the threshold luminance signal levels $\Delta LMS$ and $\Delta LSm$ have the same value.

3. Method according to claim 2, characterized in that the level of the luminance signal $S(i - k, j - p)$ of at least one spot adjacent to the considered spot $P(i, j)$ equals the mean level $S(i - k, j - p)$ of the levels of the luminance signals of a plurality of adjacent spots.

4. Method according to claim 2, characterized in that the common value of the threshold luminance signal levels $\Delta LSM$ and $\Delta LSm$ is equal to the divergence of the luminance signal corresponding to a maximum value of the histogram of the divergence of the luminance signals of the spots adjacent to the point considered $P(i, j)$.

5. Image processing device for a visualisation system comprising a cathode ray tube screen on which the image is represented by a plurality of spots $P(i, j)$ defined each by a luminance signal having a determined level, comparing means (1) producing a correction signal Sc for comparing the level of the luminance signal $S(i, j)$ of each considered spot $P(i, j)$ of the image to the level of the luminance signal $S(i - k, j - p)$ of at least one spot $P(i - k, j - p)$ adjacent to the point considered, and correction means (2) for correcting the level of the luminance signal of the considered point $P(i, j)$ including adding means (3) for algebraically adding the correction signal Sc to the level $S(i - k, j - p)$ of the luminance signal of at least one adjacent spot $P(i - k, j - p)$, characterized in that the correction means (2) comprise in addition to said algebraic adding means (3), commutation means (4) which deliver for the considered point $P(i, j)$ either a corrected signal $Sc(i, j)$ the level of which is equal to the sum of the level of the luminance signal $S(i - k, j - p)$ of at least one adjacent spot and the threshold signal level $\Delta LSM$ of the correction signal Sc, when the difference between the level of the luminance signal $S(i, j)$ of the considered spot $P(i, j)$ and the level of the luminance signal of at least one adjacent spot is positive and, expressed in absolute value, greater than a predetermined threshold value $\Delta LS$, or a corrected signal $Sc(i, j)$ the level of which is equal to the difference between the level of luminance signal $S(i - k, j - p)$ of at least one adjacent spot and a threshold luminance signal level $\Delta LSm$ of the correction signal Sc when the difference between the level of the luminance signal of the considered spot $P(i, j)$ and the level of the luminance signal of at least one adjacent spot is negative and, expressed in absolute value, higher than said threshold value $\Delta LS$, the luminance signal levels $\Delta LSM$ and $\Delta LSm$ of the correction signal having each a value corresponding to a particular divergence value of the luminance signal of the histogram of the divergences of the luminance signals of two adjacent spots $P(i, j)$ and $P(i - k, j - p)$ of the image, and which deliver a signal equal to the luminance signal $S(i, j)$ of the considered spot $P(i, j)$ when the difference between the levels of the luminance signal $S(i, j)$ of the spot $P(i, j)$ and the luminance signal of at least one adjacent spot, expressed in absolute value, is lower than said threshold value $\Delta LS$.

6. Device according to claim 5, characterized in that said comparing means (1) for comparing the level of the luminance signal $S(i, j)$ of the considered spot $P(i, j)$ to the level of the luminance signal of an adjacent spot $P(i - k, j - p)$ comprise:
— a differential amplifier (13) having two difference mode input terminals (131 and 132) connected respectively to the input terminal (10 and 11) of the comparing means (1) and receiving respectively the luminance signal $S(i, j)$ of the considered spot $P(i, j)$ and the luminance signal $S(i - k, j - p)$, and an output terminal (133) delivering a signal equal to the difference of the levels of the luminance signal $S(i, j)$ and the luminance signal $S(i - k, j - p)$;
— a first threshold trigger circuit (14) and a second threshold trigger circuit (15) comprising respectively a first trigger input terminal (141, 151) and an output terminal (142, 152), said output terminals being connected each to the output terminal (133) of the differential amplifier and the output terminal (142, 152) of each threshold trigger circuit delivering respectively when actuated, a positive voltage increment and a negative voltage increment with respective amplitudes of $\Delta LSM$ and $\Delta LSm$;
— an amplifier (16) comprising two input terminals (161, 162) and an output terminal (163), the input terminals (161 and 162) of the amplifier being connected respectively to the output terminal (142) and to the output terminal (152) of the circuits (14 and 15) and the output terminal (163) of the amplifier (16) delivering the correction signal Sc.

7. Device according to claim 6, characterized in that said first threshold circuit (14) and the second threshold circuit (15) deliver respectively, when actuated, a voltage increment having the same amplitude $\Delta LSM = \Delta LSm$.

8. Device according to claim 5, characterized in that said adding means (3) of the means (2) for correcting the luminance signal level comprise an adding amplifier (300) including, on the one hand, a first and a second input terminal receiving respectively the luminance signal $S(i - k, j - p)$ of an adjacent spot and the correction signal Sc delivered by the amplifier (16) and, on the other hand, an output terminal (33) delivering the corrected signal $Sc(i, j)$.

9. Device according to claim 5, characterized in that said commutation means (4) comprise:
— an adding amplifier (400) comprising two input terminals (4001 and 4002) connected respectively to the input terminal (42 and 43) of the commutation means;
— two switches (45 and 46) connected in parallel respectively between the input terminals (4001 and 4002) and a reference voltage of the device, said switches comprising each an actuating input terminal;
— a bistable flip-flop circuit (47) and a differentiating circuit (48), said differentiating circuit (48) comprising an input terminal connected to the input terminal (41) of the commutating means (4) and receiving the correction signal Sc, and an output terminal connected to a trigger input terminal of the bistable flip-flop circuit (47), said bistable flip-flop circuit (47) comprising complementary first and second output terminals (471, 472), said first output terminal (471) being connected to the actuating input terminal of one of the switches (45) and said second output terminal (472) being connected to the actuating input terminal of the other switch (46), each switch (45 and 46) commutating in an alternating manner the input terminals of the adding amplifier (400).

10. Device according to claim 8, characterized in that the adding amplifier (300) which is part of the adding means (3) comprises a computer (302) connected to the first input terminal of said adding amplifier, said computer receiving informations corresponding to the luminance level of a plurality of adjacents spots P(i — k, j — p), and delivering to said input terminal a signal representing the average value of the luminance levels of said adjacent spots.

11. Device according to claim 6, characterized in that said first bistable flip-flop circuit (15) and the second bistable threshold circuit (15) comprise each a second actuating input terminal (143 and 153), said device further comprising a computer (17) the output terminal of which is connected to said second actuating input terminals (143 and 153) of the bistable threshold circuits, said computer output terminal delivering to said actuating input terminals a control signal for controlling the level of the correction signal Sc the value of which is selected so as to be equal to the divergence of the luminance signal of adjacent spots for the considered spot P(i, j).

# Fig_1

# Fig_2

$S(i,j)$

$\Delta LS$

$S(i-k, j-p)$

Fig_3

Fig_4

(a)

(b)

$s(i,j) - s(i-k, j-p)$

$+\Delta LS$
$0$
$-\Delta LS$

$t$

(c)

$S_C$

$+\Delta LSM$

$0$

$-\Delta LSm$

$t$

2

# Fig_5

S(i-k,j-P)

3

300

32

33

31

Sc

42

4

47

471

4001

24

Q

45

400

41

44

48

Q̄

46

4002

43

472

S(i,j)

# Fig_6

3

S(i-k,j-P)

302

300

32

33

31